# EUROPEAN PATENT APPLICATION

(11) **EP 1 676 879 A2**
(43) Date of publication of application: **05.07.2006**
(21) Application number: 05026353.2
(22) Date of filing: 02.12.2005
(51) Int. Cl.: C08L 7/00, C08L 9/00, C08L 23/16, C08L 27/16, C08L 33/06, C08L 83/04, F16L 11/04, C09K 3/10

(54) **Dynamic vulcanization of non-nitrile rubbers in fluoroplastic polymers**

(30) Priority: 28.12.2004 US 24129
(71) Applicant: Carl Freudenberg KG, 69469 Weinheim (DE)
(72) Inventor: Park, Edward Hosung, Saline MI 48176 (US)

(57) **Abstract**

Processable rubber compositions contain a cured elastomer dispersed in a matrix comprising a thermoplastic material. The cured elastomer is present at a level of greater than or equal to 35% by weight based on the total weight of cured elastomer and thermoplastic material. The thermoplastic material comprises a fluorine containing thermoplastic polymer, and the cured elastomer comprises a non-nitrile rubber selected from the group consisting of acrylic rubber, EPDM rubber, butyl rubber, silicone rubber, butadiene rubber, isoprene rubber, and natural rubber. Methods for preparing the compositions involve dynamic vulcanization of the elastomer and thermoplastic components.

## Description

### INTRODUCTION

The present invention relates to thermoprocessable compositions containing cured non-nitrile elastomers and fluorine-containing thermoplastics. It also relates to seal and gasket type material made from the compositions and methods for their production by dynamic vulcanization techniques.

Cured fluorocarbon elastomers are thermoset materials have a desirable combination of properties including high resistance to chemicals. The elastomers are well suited for use in gaskets, seals, and the like, especially in environments where chemical contamination is present. In particular, they find use in automotive applications where their resistance to oil and other chemicals is advantageous.

Because they are thermoset, the fluorocarbon elastomers must be processed with standard rubber techniques. Once cured, the material can not be melted and re-used. Any scrap from the production process or ruined parts must be landfilled or recovered for re-use in low value recycled products.

Recently, dynamic vulcanizates containing fluorocarbon elastomers and fluoroplastic materials have been developed. The vulcanizates contain cured elastomers, but can be processed by conventional thermoplastic techniques, and scrap material can be readily recycled by melting and re-processing. It would be desirable to obtain less expensive alternatives to the vulcanizates containing a high proportion of fluorinated polymer.

Dynamic vulcanizates of nitrile rubbers in fluoroplastic polymers have been described, but other, less expensive alternatives to fluorocarbon elastomers have not been developed, despite the market need for oil-resistant processable rubber compositions.

### SUMMARY

Processable rubber compositions contain a cured elastomer dispersed in a matrix comprising a thermoplastic material. The cured elastomer is present at a level of greater than or equal to about 35% by weight based on the total weight of cured elastomer and thermoplastic material. The thermoplastic material comprises a fluorine containing thermoplastic polymer, and the cured elastomer comprises a non-nitrile rubber selected from the group consisting of acrylic rubber, EPDM rubber, butyl rubber, silicone rubber, butadiene rubber, isoprene rubber, and natural rubber. Methods for preparing the compositions involve dynamic vulcanization of the elastomer and thermoplastic components.

### DESCRIPTION

The following description of the preferred embodiment(s) is merely exemplary in nature and is in no way intended to limit the invention, its application, or uses.

The headings (such as "Introduction" and "Summary,") used herein are intended only for general organization of topics within the disclosure of the invention, and are not intended to limit the disclosure of the invention or any aspect thereof. In particular, subject matter disclosed in the "Introduction" may include aspects of technology within the scope of the invention, and may not constitute a recitation of prior art. Subject matter disclosed in the "Summary" is not an exhaustive or complete disclosure of the entire scope of the invention or any embodiments thereof.

The citation of references herein does not constitute an admission that those references are prior art or have any relevance to the patentability of the invention disclosed herein. All references cited in the Description section of this specification are hereby incorporated by reference in their entirety.

The description and specific examples, while indicating embodiments of the invention, are intended for purposes of illustration only and are not intended to limit the scope of the invention. Moreover, recitation of multiple embodiments having stated features is not intended to exclude other embodiments having additional features, or other embodiments incorporating different combinations of the stated features. Specific Examples are provided for illustrative purposes of how to make, use and practice the compositions and methods of this invention and, unless explicitly stated otherwise, are not intended to be a representation that given embodiments of this invention have, or have not, been made or tested.

As used herein, the words "preferred" and "preferably" refer to embodiments of the invention that afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, the word "include," and its variants, is intended to be non-limiting, such that recitation of items in a list is not to the exclusion of other like items that may also be useful in the materials, compositions, devices, and methods of this invention.

The terms "elastomeric material", "elastomer" and the like refer to chemical compositions that possess, or can be modified (i.e. cured or crosslinked) to possess elastomeric properties. According to context, the terms refer to an uncured or partially cured material, in which elastomeric properties are not fully developed, or to a cured rubber-like material, with fully developed elastomeric properties. At some points in the specification, the terms are used with adjectives such as "cured", "partially cured", or "uncured" for clarity.

The terms "curing agent", "curative", "curative agent," and the like are used interchangeably to designate the chemical compound or composition that reacts with the (uncured) elastomer to form a cured elastomer and to develop the elastomeric properties of the cured product. According to context it is used to refer to a formal curing initiator (e.g. a radical initiator such as a peroxide) as well as a crosslinking agent that may be used in conjunction with the initiator (e.g. triallyl isocyanurate). At some points, the term "curing system" or the like is used to refer to a combination of initiator and crosslinker and optional additional components used in the curing. It is to be understood that often the curing system is provided by an elastomer supplier (and may be incorporated into the elastomer), and may be used according to the manufacturer's instructions.

Processable rubber compositions are provided that contain a vulcanized elastomeric material dispersed in a matrix. The vulcanized elastomeric material is the product of vulcanizing, crosslinking, or curing an elastomer. The matrix is made of a thermoplastic material containing at least one fluorine containing thermoplastic polymer. The processable rubber compositions may be processed by conventional thermoplastic techniques to form shaped articles having physical properties that make them useful in a number of applicatiorts calling for elastomeric properties. In particularly preferred embodiments, shaped articles made from the processable compositions typically exhibit a Shore A hardness of about 50 or more, preferably about 70 or more, typically in the range of from about 70 to about 90. In addition or alternatively, the tensile strength of the shaped articles will preferably be about 4 MPa or greater, preferably about 8 MPa or greater, typically about 8 to about 13 MPa. In still other embodiments, shaped articles may be characterized as having a modulus at 100% of at least about 2 MPa, preferably at least about 4 MPa, and typically in the range of from about 4 to about 8 MPa. In other embodiments, elongation at break of articles made from the processable compositions of the invention will be 10% or greater, preferably at least about 50%, more preferably at least about 150%, and typically in the range of from about 150 to about 300 %. Shaped articles of the invention may be characterized as having at least one of hardness, tensile strength, modulus, and elongation at break in the above noted ranges.

In one aspect, the rubber compositions are made of two-phases where the matrix forms a continuous phase, and the vulcanized elastomeric material is in the form of particles forming a non-continuous, disperse, or discrete phase. In another aspect, the elastomeric material and the matrix form co-continuous phases.

In preferred embodiments, the compositions contain about 35% by weight or more, and preferably about 40% by weight or more of the elastomer phase, based on the total weight of elastomer and thermoplastic material. In other embodiments, the compositions contain about 50% by weight or more of the elastomer phase. The compositions are homogenous blends of two phases that are sufficiently compatible that the compositions may readily be formed into shaped articles having sufficient elastomer properties, such as tensile strength, modulus, elongation at break, and compression set to be industrially useful as seals, gaskets, O-rings, hoses, and the like.

The elastomer phase may be present in the form of particles in a continuous thermoplastic phase, as a 3-D network forming a co-continuous phase with the thermoplastic material, or as a mixture of both. The particles or 3-D network of the elastomer phase preferably have minimum dimensions of about 10 µm or less, and more preferably about 1 µm or less.

The rubber compositions of the invention are made by dynamic vulcanization of an elastomer in the presence of a thermoplastic component. Methods for making the rubber composition involve combining a curative agent, an elastomeric material, and a thermoplastic material to form a mixture. The mixture is heated at a temperature and for a time sufficient to effect vulcanization or cure of the elastomer in the presence of the thermoplastic material. Mechanical energy is applied to the mixture of elastomeric material, curative agent and thermoplastic material during the heating step. Thus the method of the invention provides for mixing the elastomer and thermoplastic components in the presence of a curative agent and heating during the mixing to effect cure of the elastomeric component. Alternatively, the elastomeric material and thermoplastic material may be mixed for a time and at a shear rate sufficient to form a dispersion of the elastomeric material in a continuous or co-continuous thermoplastic phase. Thereafter, a curative agent may be added to the dispersion of elastomeric material and thermoplastic material while continuing the mixing. Finally, the dispersion is heated while continuing to mix to produce the processable rubber composition of the invention.

The compositions of the invention are readily processable by conventional plastic processing techniques. In another embodiment, shaped articles are provided comprising the cured, elastomers dispersed in a thermoplastic matrix. Shaped articles of the invention include, without limitation, seals, O-rings, gaskets, and hoses.

In a preferred embodiment, shaped articles prepared from the compositions of the invention exhibit an advantageous set of physical properties that includes a high degree of resistance to the effects of chemical solvents. In these embodiments, it is possible to provide articles for which the hardness, tensile strength, and/or the elongation at break change very little or change significantly less than comparable cured fluorocarbon elastomers or other known thermoplastic vulcanizates, when the articles are exposed for extended periods of time such as by immersion or partial immersion in organic solvents or fuels.

The elastomer undergoes dynamic vulcanization in the presence of thermoplastic non-curing polymers to provide compositions with desirable rubber-like properties, but that can be thermally processed by conventional thermoplastic methods such as extrusion, blow molding, and injection molding. The elastomers are generally synthetic, non-crystalline polymers that exhibit rubber-like properties when crosslinked, cured, or vulcanized. As such, the cured elastomers, as well as the compositions of the invention made by dynamic vulcanization of the elastomers, are observed to substantially recover their original shape after removal of a deforming force, and show reversible elasticity up to high strain levels.

In various embodiments, the elastomers are non-nitrile rubbers selected from the group consisting of acrylic rubber, EPDM rubber, EPM rubber, butyl rubber, silicone rubber, butadiene rubber, isoprene rubber, and natural rubber. Mixtures of elastomers may also be used. In various embodiments, the non-nitrile rubbers are combined with fluorocarbon elastomers.

The curing agent or curing system is chosen as one suitable for reacting with and crosslinking the elastomeric material. Depending on the elastomer, suitable crosslinking or curing agents include sulfur, sulfur donors, peroxides, phenolic curative, diamines, bismaleimides, and the like.

Non-limiting examples of non-nitrile rubbers include diene rubbers such as natural rubber (NR), styrene-butadiene rubber (SBR), butadiene rubber (BR), ethylene-propylene-diene monomer rubber (EPDM), isoprene rubber (IR), butyl rubber (IIR), and chlorobutyl rubber (CIIR). The diene rubbers are well known in the art, as indicated by their common abbreviations given above in parentheses. They are commercially available, along with suitable curing agents and systems, from a variety of sources.

In various embodiments, diene rubbers of the invention are cured with sulfur vulcanization agents. In an exemplary recipe, from about 0.4 to about 4 phr of sulfur are used together with from about 0.5 to about 2 phr of a sulfur accelerator to provide systems that can cure in a matter of minutes. Normally, cure is further enhanced by the action of metal salt such as a zinc carboxylate, which is conveniently provided from ZnO and a fatty acid such as stearic acid included in the rubber formulation. A wide variety of accelerators is known. Non-limiting examples include benzothiazoles, benzothiazolesulfenamides, dithiocarbamates, and amines such as diphenylguanidine and di-o-tolylguanidine (DOTG). Sulfur is provided in the form of elemental sulfur, a sulfur donor such as tetramethylthiuram disulfide (TMTD) or dithiodimorpholine (DTDM), or a combination of elemental sulfur and sulfur donor.

In other embodiments, phenolic curatives are used to crosslink a diene rubber. These crosslinking agents are based on phenol, usually substituted with -CH2X, where X is a halogen. The curative contains proton and electron acceptors in a proper steric relationship to establish a crosslink. In still other embodiments, bismaleimides such as m-phenylenebismaleimide are used as crosslinkers. A free radical source such as an organic peroxide may be used to initiate crosslinking by the bismaleimides. At higher temperatures, a free radical source is not required.

In various embodiments, organic peroxides are used to crosslink or cure diene rubbers, as well as other elastomers discussed below. They are useful for isoprene rubbers and butadiene rubbers, but are not preferred for butyl rubber. Peroxide curing systems are discussed below with respect to fluoroelastomers.

Acrylic elastomers have the ASTM designation ACM for polymers of ethyl acrylate and other acrylates, and ANM for copolymers of ethyl or other acrylates with acrylonitrile. Acrylic elastomers are prepared by polymerizing so-called backbone monomers with optionally a minor amount of cure site monomer. The backbone monomers are selected from among ethyl acrylate and other acrylic monomers. Other preferred acrylic acrylate monomers to be co-polymerized together with ethyl acrylate to make acrylic elastomers include n-butyl acrylate, 2-methoxyethyl acrylate, and 2-ethoxyethyl acrylate.

In various embodiments, the acrylic elastomers contain from about 1 to about 5 mole % or weight % of cure site monomers to introduce reactive sites for subsequent crosslinking. The particular cure site monomer used in an acrylic elastomer is in general proprietary to the supplier of the elastomer. Among common cure site monomers are those that contain unsaturated carbon bonds in their side chain and those that contain a carbon chlorine bond in the side chain. Acrylic elastomers (ACM) are commercially available, such as from Zeon under the Nypol® and Hytemp® tradenames, and from Unimatec under the Noxtite® tradename.

Ethylene acrylic elastomers have the ASTM designation AEM. They are based on copolymers of ethylene and acrylate monomers, with a minor amount of cure site monomer that, usually has a carboxyl group in the side chain. Curing agents or crosslinking agents may then be used to cure or vulcanize the ethylene acrylic elastomer by reacting with the functional group in the cure site monomer. Although the precise nature of the crosslinking agent is proprietary to the supplier of the ethylene acrylic elastomers, two main classes of curing or vulcanization agents for use with such elastomers are the class of diamines and the class of peroxides. Diamines have the advantage that they cure more slowly but can be used at higher temperatures without scorch from too fast a cure. Mixtures of curing agents may be used, as is known to those of skill in the art, to obtain a desirable cure rate in light of the temperature conditions of the reaction. Ethylene acrylic elastomers are commercially available, for example from DuPont under the Vamac® tradename. For example, Vamac G is used to designate a line diamine cured elastomers, while Vamac D represents a line of peroxide cured elastomers.

Silicone rubbers are well known. They are based on polysiloxanes that can be generally be crosslinked by the action of a number of curing agents or curing systems to form cured elastomers. Suitable curing agents include silanes, peroxides, and platinum catalysts. Commercial sources of silicone rubbers and curing systems include Dow Corning and General Electric.

In various embodiments, the elastomer comprises ethylene-propylene rubbers. These include ethylene-propylene copolymers (EPM) and ethylene-propylene terpolymers (EPDM). The basic building blocks are ethylene and propylene, which can be combined with a third or fourth monomer to provide olefinic sites along the backbone. Olefinic sites improve crosslinking response to peroxides and permit direct sulfur cure. Monomers used to insert olefinic sites are generally non-conjugated dienes such as, without limitation, 5-ethylidene-2-norbornene, 1,4-hexadiene, and dicyclopentadiene.

In various embodiments, the elastomeric material described also contains one or more fluorocarbon elastomers. Depending on the application, the elastomeric material comprises from 5 to about 95% fluorocarbon. When fluorocarbon elastomers are present, suitable curative agents are also provided. In some embodiments, a similar curative is used for the fluorocarbon and non-fluorocarbon elastomer.

Preferred fluorocarbon elastomers include commercially available copolymers of one or more fluorine containing monomers, chiefly vinylidene fluoride (VDF), hexafluoropropylene (HFP), tetrafluoroethylene (TFE), and perfluorovinyl ethers (PFVE). Preferred PFVE include those with a C1-8 perfluoroalkyl group, preferably perfluoroalkyl groups with 1 to 6 carbons, and particularly perfluoromethyl vinyl ether and perfluoropropyl vinyl ether. In addition, the copolymers may also contain repeating units derived from olefins such as ethylene (Et) and propylene (Pr). The copolymers may also contain relatively minor amounts of cure site monomers (CSM), discussed further below. Non-limiting examples of fluorocarbon elastomers include VDF/HFP, VDF/HFP/CSM, VDF/HFP/TFE, VDF/HFP/TFE/CSM, VDF/PFVE/TFE/CSM, TFE/Pr, TFE/Pr/VDF, TFE/Et/PFVE/VDF/CSM, TFE/Et/PFVE/CSM and TFE/PFVE/CSM. The elastomer designation gives the monomers from which the elastomer gums are synthesized. The elastomer gums have viscosities that give a Mooney viscosity in the range generally of from about 15 to about 160 (ML1 + 10, large rotor at about 121°C), which can be selected for a combination of flow and physical properties. Elastomer suppliers include Dyneon (3M), Asahi Glass Fluoropolymers, Solvay/Ausimont, Dupont, and Daikin.

In one embodiment, the elastomeric material may be described as a copolymer of tetrafluoroethylene and at least one C2-4 olefin. As such, the elastomeric material comprises repeating units derived from tetrafluoroethylene and at least one C2-4 olefin. A preferred C2-4 olefin is propylene. Elastomeric materials based on copolymers of tetrafluoroethylene and propylene are commercially available, for example from Asahi under the Aflas® trade name. Optionally, the elastomeric material may contain repeating units derived from one or more additional fluorine-containing monomers.

A preferred additional monomer in the vulcanized elastomeric material is vinylidene difluoride. Other fluorine-containing monomers that may be used in the elastomeric materials of the invention include without limitation, perfluoroalkyl vinyl compounds, perfluoro-alkyl vinylidene compounds, and perfluoroalkoxy vinyl compounds. Hexafluoropropylene (HFP) is an example of perfluoroalkyl vinyl monomer. Perfluoromethyl vinyl ether is an example of a preferred perfluoroalkoxy vinyl monomer. For example, rubbers based on copolymers of tetrafluoroethylene, ethylene, and perfluoromethyl vinyl ether are commercially available from Dupont under the Viton® ETP trade name.

Fluorocarbon elastomeric materials used to make the processable rubber compositions of the invention include that are be prepared by free radical emulsion polymerization of a monomer mixture containing the desired molar ratios of starting monomers. Initiators are typically organic or inorganic peroxide compounds, and the emulsifying agent is typically a fluorinated acid soap. The molecular weight of the polymer formed may be controlled by the relative amounts of initiators used compared to the monomer level and the choice of transfer agent if any. Typical transfer agents include carbon tetrachloride, methanol, and acetone. The emulsion polymerization may be conducted under batch or continuous conditions. Such fluoroelastomers are commercially available as noted above.

The fluorocarbon elastomers may also contain up to about 5 mole % and preferably up to 3 mole % of repeating units derived from so-called cure site monomers that provide cure sites for vulcanization. In one embodiment, the cure site repeating units are derived from bromine-containing or iodine-containing olefin monomers. If used, preferably the repeating units of a the cure site monomer are present in a level to provide at least about about 0.05% bromine or iodine in the polymer, preferably about 0.3% bromine or more. In a preferred embodiment, the total weight of bromine and/or in the polymer is about 1.5 wt. % or less.

Other cure monomers may be used that introduce low levels, preferably less than or equal about 5 mole %, more preferably less than or equal about 3 mole %, of functional groups such as epoxy, carboxylic acid, carboxylic acid halide, carboxylic ester, carboxylate salts, sulfonic acid groups, sulfonic acid alkyl esters, and sulfonic acid salts. Such monomers and cure are described for example in Kamiya et al., US patent 5, 354, 811, the disclosure of which is hereby incorporated by reference.

Thermoplastic fluorine-containing polymers may be selected from a wide range of polymers and commercial products. The polymers are melt processable - they soften and flow when heated, and can be readily processed in thermoplastic techniques such as injection molding, extrusion, compression molding, and blow molding. The materials are readily recyclable by melting and re-processing. Commercial embodiments are available which contain from about 59 to about 76% by weight fluorine.

Fully fluorinated thermoplastic polymers include copolymers of tetrafluoroethylene and perfluoroalkyl vinyl ethers. The perfluoroalkyl group is preferably of 1 to 6 carbon atoms. Examples of copolymers are PFA (copolymer of TFE and perfluoropropyl vinyl ether) and MFA (copolymer of TFE and perfluoromethyl vinyl ether). Other examples of fully fluorinated thermoplastic polymers include copolymers of TFE with perfluoro olefins of 3 to 8 carbon atoms. Non-limiting examples include FEP (copolymer of TFE and hexafluoropropylene).

Partially fluorinated thermoplastic polymers include E-TFE (copolymer of ethylene and TFE), E-CTFE (copolymer of ethylene and chlorotrifluoroethylene), and PVDF (polyvinylidene fluoride). A number of thermoplastic copolymers of vinylidene fluoride are also suitable thermoplastic polymers for use in the invention. These include, without limitation, copolymers with perfluoroolefins such as hexafluoropropylene, and copolymers with chlorotrifluoroethylene. Thermoplastic terpolymers may also be used. These include thermoplastic terpolymers of TFE, HFP, and vinylidene fluoride. Fully fluorinated fluoroplastics are characterized by relatively high melting points, when compared to the vinylidene fluoride based thermoplastics that are also included in the fluoroplastic blend of the invention. As examples, PFA has a melting point of about 305°C, MFA has a melting point of 280-290°C, and FEP has a melting point of about 260-290°C. The melting point of individual grades depends on the exact structure, processing conditions, and other factors, but the values given here are representative. A consequence of a high melting point is that thermoplastic processing techniques, such as blow molding, injection molding, and extrusion need to be carried out at temperatures above the relatively high melting point. In the case of thermoplastic processing of compositions containing a cured elastomer, the elastomer is exposed for extended periods of time to the relatively temperature required to melt the thermoplastic and make it flow. Many elastomers are adversely affected by the high temperatures, and suffer degradation.

Partially fluorinated fluoroplastics such as the vinylidene fluoride homo- and copolymers described above have relatively lower melting points than the fully fluorinated fluoroplastics. For example, polyvinylidene fluoride has a melting point of about 160 to about 170°C. Some copolymer thermoplastics have an even lower melting point, due to the presence of a small amount of co-monomer. For example, a vinylidene fluoride copolymer with a small amount of hexafluoropropylene, exemplified in a commercial embodiment such as the Kynar Flex series, exhibits a melting point in the range of about 105 to about 160 °C, and typically about 130°C. These low melting points lead to advantages in thermoplastic processing, as lower temperatures of melting lead to lower energy costs and avoidance of the problem of degradation of cured elastomers in the compositions. One drawback of the partially fluorinated polymers for some applications is their relatively low fluorine content. Polyvinylidene fluoride has only about 59% by fluorine, while the fully fluorinated polymers have fluorine content from about 71% (MFA) to about 76% (FEP). In some applications, a higher fluorine content is desirable for contributing to increased solvent resistance and other properties.

In various embodiments, the compositions, shaped articles, and methods of the invention are based on a fluoroplastic blend comprising a fully fluorinated polymer and a partially fluorinated polymer. The fluoroplastic blend preferably contains 10-90% by weight of the fully fluorinated polymer component, and from about 10 to about 90% by weight of the partially fluorinated polymer component. The weight ratio of the fully fluorinated polymer to the partially fluorinated polymer preferably ranges from about 1:9 to about 9:1. The compositions preferably exhibit a single melt temperature below about 305°C, and preferably below about 250°C. In various embodiments, the blends melt and flow at from about 180 to about 190°C. They may be melt processed and fabricated into shaped articles with thermoplastic techniques operating below the melting temperature of the fully fluorinated polymer of the fluoroplastic blend.

Where blends of fluoroplastics or fluoroplastic polymer components are use, the blend contains a fully fluorinated polymer and a partially fluorinated polymer such as a thermoplastic homo- or copolymer of vinylidene fluoride. The blend may contain minor amounts of a non-fluorine containing polymer, but the amount is limited by the requirement that the blend remain compatible, giving a homogeneous thermoplastic phase, and exhibiting the melting point behavior discussed below. In various embodiments, the ratio of fully fluorinated to partially fluorinated polymers in the fluoroplastic blend ranges from about 9:1 to about 1:9. In various embodiments, the blend comprises about 10-90, about 20-80, about 25-75, about 33-67, about 40-60 or about 50 parts of one of the components, with the other component present at a level to bring it up to 100 parts. In embodiments where no other polymers are present in the fluoroplastic blend except the fully fluorinated and partially fluorinated polymers, the parts correspond to % by weight of the total weight of the fluoroplastic blend.

In another aspect, the fluoroplastic blend comprises two fluoropolymers, one with greater than about 65 wt% fluorine content, the other with less than about 65 wt% fluorine content. The two fluoropolymers are present in the same ratios as stated above. In a preferred embodiment, the polymer with greater than 65% fluorine is fully fluorinated.

Processable rubber compositions made from a fluoroplastic blend exhibit a DSC melting temperature lower than that of the fully fluorinated polymer of the blend. In various embodiments, the DSC melting temperature is below about 305°C, preferably below about 250°C. In a preferred embodiment, the melting temperature is below about 240°C and preferably around 180-190°C. Thus, in various embodiments, the processable rubber compositions will have a melting point of less than about 250°C and a continuous phase with a fluorine content of greater than about 59 wt% F. In various embodiments, the fluorine content is greater than about 65 wt% and a melting point below about 290°C, or preferably below about 250°C. In a preferred embodiment, the compositions exhibit a melting point around 180-190°C.

In addition to the elastomeric material, the thermoplastic polymeric material, and curative, the processable rubber compositions of this invention can include other additives such as stabilizers processing aids, curing accelerators, fillers, pigments, adhesives, tackifiers, and waxes. The properties of the compositions and articles of the invention may be modified, either before or after vulcanization, by the addition of ingredients that are conventional in the compounding of rubber, thermoplastics, and blends thereof.

A wide variety of processing aids may be used, including plasticizers and mold release agents. Non-limiting examples of processing aids include Caranuba wax, phthalate ester plasticizers such as dioctylphthalate (DOP) and dibutylphthalate silicate (DBS), fatty acid salts such zinc stearate and sodium stearate, polyethylene wax, and keramide. In some embodiments, high temperature processing aids are preferred. Such include, without limitation, linear fatty alcohols such as blends of C10-C28 alcohols, organosilicones, and functionalized perfluoropolyethers. In some embodiments, the compositions contain about 1 to about 15% by weight processing aids, preferably about 5 to about 10% by weight.

Acid acceptor compounds are commonly used as curing accelerators or curing stabilizers. Preferred acid acceptor compounds include oxides and hydroxides of divalent metals. Non-limiting examples include Ca(OH)2, MgO, CaO, and ZnO.

Non-limiting examples of fillers include both organic and inorganic fillers such as, barium sulfate, zinc sulfide, carbon black, silica, titanium dioxide, clay, talc, fiber glass, fumed silica and discontinuous fibers such as mineral fibers, wood cellulose fibers, carbon fiber, boron fiber, and aramid fiber (Kevlar). Some non-limiting examples of processing additives include stearic acid and lauric acid. The addition of carbon black, extender oil, or both, preferably prior to dynamic vulcanization, is particularly preferred. Non-limiting examples of carbon black fillers include SAF black, HAF black, SRP black and Austin black. Carbon black improves the tensile strength, and an extender oil can improve processability, the resistance to oil swell, heat stability, hysteresis, cost, and permanent set. In a preferred embodiment, fillers such as carboxy block may make up to about 40% by weight of the total weight of the compositions of the invention. Preferably, the compositions comprise 1-40 weight % of filler. In other embodiments, the filler makes up about 10 to about 25 weight % of the compositions.

The vulcanized elastomeric material, also referred to herein generically as a "rubber", is generally present as small particles within a continuous thermoplastic polymer matrix. A co-continuous morphology is also possible depending on the amount of elastomeric material relative to thermoplastic material, the cure system, and the mechanism and degree of cure of the elastomer and the amount and degree of mixing. Preferably, the elastomeric material is fully crosslinked/cured.

Full crosslinking can be achieved by adding an appropriate curative or curative system to a blend of thermoplastic material and elastomeric material, and vulcanizing or curing the rubber to the desired degree under vulcanizing conditions. In a preferred embodiment, the elastomer is crosslinked by the process of dynamic vulcanization. The term dynamic vulcanization refers to a vulcanization or curing process for a rubber contained in a thermoplastic composition, wherein the curable rubber is vulcanized under conditions of sufficiently high shear at a temperature above the melting point of the thermoplastic component. The rubber is thus simultaneously crosslinked and dispersed within the thermoplastic matrix. Dynamic vulcanization is effected by applying mechanical energy to mix the elastomeric and thermoplastic components at elevated temperature in the presence of a curative in conventional mixing equipment such as roll mills, Moriyama mixers, Banbury mixers, Brabender mixers, continuous mixers, mixing extruders such as single and twin-screw extruders, and the like. An advantageous characteristic of dynamically cured compositions is that, notwithstanding the fact that the elastomeric component is fully cured, the compositions can be processed and reprocessed by conventional plastic processing techniques such as extrusion, injection molding and compression molding. Scrap or flashing can be salvaged and reprocessed.

Heating and mixing or mastication at vulcanization temperatures are generally adequate to complete the vulcanization reaction in a few minutes or less, but if shorter vulcanization times are desired, higher temperatures and/or higher shear may be used. A suitable range of vulcanization temperature is from about the melting temperature of the thermoplastic material (typically about 120°C) to about 300°C or more. Typically, the range is from about 150°C to about 250°C. A preferred range of vulcanization temperatures is from about 180°C to about 220°C. It is preferred that mixing continue without interruption until vulcanization occurs or is complete.

If appreciable curing is allowed after mixing has stopped, an unprocessable thermoplastic vulcanizate may be obtained. In this case, a kind of post curing step may be carried out to complete the curing process. In some embodiments, the post curing takes the form of continuing to mix the elastomer and thermoplastic during a cool-down period.

After dynamic vulcanization, a homogeneous mixture is obtained, wherein the rubber is in the form of small dispersed particles essentially of an average particle size smaller than about 50 µm, preferably of an average particle size smaller than about 25 µm. More typically and preferably, the particles have an average size of about 10 µm or less, preferably about 5 µm or less, and more preferably about 1 µm or less. In other embodiments, even when the average particle size is larger, there will be a significant number of cured elastomer particles less than 1 µm in size dispersed in the thermoplastic matrix.

The homogenous nature of the compositions, the small particle size indicative of a large surface area of contact between the phases, and the ability of the compositions to be formed into shaped articles having sufficient hardness, tensile strength, modulus, elongation at break, or compression set to be useful in industrial applications, indicate a relatively high degree of compatibility between the elastomer and thermoplastic phases. It is believed such compatibility results from the dynamic vulcanization process. During the process, the elastomeric particles are being crosslinked or cured while the two phases are being actively mixed and combined. In addition, the higher temperature and the presence of reactive crosslinking agent may lead to some physical or covalent linkages between the two phases. At the same time, the process leads to a finer dispersion of the discrete or co-continuous elastomer phase in the thermoplastic than is possible with simple filling.

The fluoroplastic continuous phase of the dynamic vulcanizates provides shaped articles with improved solvent restraint and stability, relative to non-fluorocarbon containing vulcanizates. In addition, the presence of non-fluorocarbon rubbers provides compositions that are generally less expensive than fully fully fluorinated vulcanizates.

The progress of the vulcanization may be followed by monitoring mixing torque or mixing energy requirements during mixing. The mixing torque or mixing energy curve generally goes through a maximum after which mixing can be continued somewhat longer to improve the fabricability of the blend. If desired, one can add additional ingredients, such as the stabilizer package, after the dynamic vulcanization is complete.

The processable rubber compositions of the invention may be manufactured in a batch process or a continuous process.

In a batch process, predetermined charges of elastomeric material, thermoplastic material and curative agents are added to a mixing apparatus. In a typical batch procedure, the elastomeric material and thermoplastic material are first mixed, blended, masticated or otherwise physically combined until a desired particle size of elastomeric material is provided in a continuous phase of thermoplastic material. When the structure of the elastomeric material is as desired, a curative agent may be added while continuing to apply mechanical energy to mix the elastomeric material and thermoplastic material. Curing is effected by heating or continuing to heat the mixing combination of thermoplastic and elastomeric material in the presence of the curative agent. When cure is complete, the processable rubber composition may be removed from the reaction vessel (mixing chamber) for further processing.

It is preferred to mix the elastomeric material and thermoplastic material at a temperature where the thermoplastic material softens and flows. If such a temperature is below that at which the curative agent is activated, the curative agent may be a part of the mixture during the initial particle dispersion step of the batch process. In some embodiments, a curative is combined with the elastomeric and polymeric material at a temperature below the curing temperature. When the desired dispersion is achieved, the temperature may be increased to effect cure. In one embodiment, commercially available elastomeric materials are used that contain a curative pre-formulated into the elastomer. However, if the curative agent is activated at the temperature of initial mixing, it is preferred to leave out the curative until the desired particle size distribution of the elastomeric material in the thermoplastic matrix is achieved. In another embodiment, curative is added after the elastomeric and thermoplastic material are mixed. In a preferred embodiment, the curative agent is added to a mixture of elastomeric particles in thermoplastic material while the entire mixture continues to be mechanically stirred, agitated or otherwise mixed.

Continuous processes may also be used to prepare the processable rubber compositions of the invention. In various embodiments, a twin screw extruder apparatus, either co-rotation or counter-rotation screw type, is provided with ports for material addition and reaction chambers made up of modular components of the twin screw apparatus. In a typical continuous procedure, thermoplastic material and elastomeric material are combined by inserting them into the screw extruder together from a first hopper using a feeder (loss-in-weight or volumetric feeder). Temperature and screw parameters are adjusted to provide a proper temperature and shear to effect the desired mixing and particle size distribution of an uncured elastomeric component in a thermoplastic material matrix. The duration of mixing is controlled by providing a longer or shorter length of extrusion apparatus or by controlling the speed of screw rotation for the mixture of elastomeric material and thermoplastic material to go through during the mixing phase. The degree of mixing may also be controlled by the mixing screw element configuration in the screw shaft, such as intensive, medium or mild screw designs. Then, at a downstream port, by using side feeder (loss-in-weight or volumetric feeder), the curative agent may be added continuously to the mixture of thermoplastic material and elastomeric material as it continues to travel down the twin screw extrusion pathway. Downstream of the curative additive port, the mixing parameters and transit time may be varied as described above. By adjusting the shear rate, temperature, duration of mixing, mixing screw element configuration, as well as the time of adding the curative agent, processable rubber compositions of the invention may be made in a continuous process.

The compositions and articles of the invention will contain a sufficient amount of vulcanized elastomeric material ("rubber") to form a rubbery composition of matter, that is, they will exhibit a desirable combination of flexibility, softness, and compression set. Preferably, the compositions should comprise at least about 25 parts by weight rubber, preferably at least about 35 parts by weight rubber, more preferably at least about 40 parts by weight rubber, even more preferably at least about 45 parts by weight rubber, and still more preferably at least about 50 parts by weight rubber per 100 parts by weight of the rubber and thermoplastic polymer combined. The amount of cured rubber within the thermoplastic vulcanizate is generally from about 5 to about 95 percent by weight, preferably from about 35 to about 95 percent by weight, more preferably from about 40 to about 90 weight percent, and more preferably from about 50 to about 80 percent by weight of the total weight of the rubber and the thermoplastic polymer combined.

The amount of thermoplastic polymer within the processable rubber compositions of the invention is generally from about 5 to about 95 percent by weight, preferably from about 10 to about 65 percent by weight and more preferably from about 20 to about 50 percent by weight of the total weight of the rubber and the thermoplastic combined.

As noted above, the processable rubber compositions and shaped articles of the invention include a cured rubber and a thermoplastic polymer. Preferably, the thermoplastic vulcanizate is a homogeneous mixture wherein the rubber is in the form of finely-divided and well-dispersed rubber particles within a non-vulcanized matrix. It should be understood, however, that the thermoplastic vulcanizates of the this invention are not limited to those containing discrete phases inasmuch as the compositions of this invention may also include other morphologies such as co-continuous morphologies. In especially preferred embodiments, the rubber particles have an average particle size smaller than about 50 µm, more preferably smaller than about 25 µm, even more preferably smaller than about 10 µm or less, and still more preferably smaller than about 5 µm.

Advantageously, the shaped articles of the invention are rubber-like materials that, unlike conventional rubbers, can be processed and recycled like thermoplastic materials. These materials are rubber like to the extent that they will retract to less than about 1.5 times their original length within one minute after being stretched at room temperature to twice its original length and held for one minute before release, as defined in ASTM D1566. Preferred materials satisfy the tensile set requirements set forth in ASTM D412 and the elastic requirements for compression set per ASTM D395.

The reprocessability of the rubber compositions of the invention may be exploited to provide a method for reducing the costs of a manufacturing process for making shaped rubber articles. The method involves recycling scrap generated during the manufacturing process to make other new shaped articles. Because the compositions of the invention and the shaped articles made from the compositions are thermally processable, scrap may readily be recycled for re-use by collecting the scrap, optionally cutting, shredding, grinding, milling, otherwise comminuting the scrap material, and re-processing the material by conventional thermoplastic techniques. Techniques for forming shaped articles from the recovered scrap material are in general the same as those used to form the shaped articles ― the conventional thermoplastic techniques include, without limitation, blow molding, injection molding, compression molding, and extrusion.

The re-use of the scrap material reduces the costs of the manufacturing process by reducing the material cost of the method. Scrap may be generated in a variety of ways during a manufacturing process for making shaped rubber articles. For example, off-spec materials may be produced. Even when on-spec materials are produced, manufacturing processes for shaped rubber articles tend to produce waste, either through inadvertence or through process design, such as the material in sprues of injection molded parts. The re-use of such materials through recycling reduces the material and thus the overall costs of the manufacturing process.

For thermoset rubbers, such off spec materials usually can not be recycled into making more shaped articles, because the material can not be readily re-processed by the same techniques as were used to form the shaped articles in the first place. Recycling efforts in the case of thermoset rubbers are usually limited to grinding up the scrap and the using the grinds as raw material in a number products other than those produced by thermoplastic processing technique.

### EXAMPLES

In Examples 1-12, the following materials are used:

Vamac® (AEM) is a tough, low-compression-set rubber with excellent resistance to high temperatures, hot oil, fluids and weathering from E.I. du Pont de Nemours and Company.

Naugard® 445 is an antioxidant, 4,4'-di(dimethylbenzyl)diphenylamine, from CROMPTON Company.

Armeen 18D is a release agent, 1-octadeclyamine, from Armak Chemicals.

Vanfre® VAM is an anionic surfactant and processing aid, polyoxyethylene octadecyl ether phosphate, from R.T. Vanderbilt Company, Inc.

DIAK No. 1 is a curing agent, 6-aminohexyl carbonic acid, from DuPont Dow Elastomers L.L.C.

Vanax® DOTG is an accelerator, N,N'-di-o-tolyguanidine, from R.T. Vanderbilt Company, Inc.

Hylar MP-10 is a polyvinylidene fluoride fluoroplastic from Ausimont.

Noxtite PA-422 (ACM) is an acrylic rubber from Unimatec.

HAF carbon (N330) is carbon filler.

NS-Soap is sodium stearate.

Cheminox ACE-76 is an acrylic elastomer from Zeon Chemicals L.P.

Halar 500LC is a thermoplastic copolymer of ethylene and chlorotrifluoroethylene from Ausimont.

Nordel 1040 (EPDM) is a metallocene ethylene-propylene-diene terpolymer (EPDM), based on the proprietary INSITE™ technology from DuPont Dow Elastomers.

ZnO is zinc oxide.

N990 and N550 are carbon black fillers.

Sunpar 2280 is a process oil from Sunoco, Inc.

Varox® 231 (1,1-bis(t-butylperoxy)3,3,5-trimethylcyclohexane) is a peroxide crosslinking agent, from R.T. Vanderbilt Company, Inc.

Butyl 268 is a butyl rubber, copolymer of isobutylene and isoprene from ExxonMobil Chemical.

Paraffin Oil is a saturated hydrocarbon (mineral oil) used as a processing oil.

Ethyl cadmate is an elastomer accelerator, cadmium diethyldithiocarbamate, from R.T. Vanderbilt Company, Inc.

Altax is a NR and synthetic rubber accelerator that is non-staining and non-discoloring from R.T. Vanderbilt Company, Inc.

ACM, AY 1122 is an acrylic elastomer from Unimatec.

DHT-4A-2 is a hydrotalcite like compound from Kyowa Chemical Industry Co., Ltd.

Emerox 1144 is a dicarboxylic acid in powder form, 1,9-nonanedioc acid, from Henkel Corporation.

Accelerator is a quaternary ammonium sulfate accelerator.

EMASTER 430W is a fatty acid ester processing aid and plasticizer supplied by Riken Vitamin Co., Ltd. of Tokyo, Japan.

Tecnoflon P757 is a medium viscosity, medium fluorine, peroxide curable fluoroelastomer from Solvay.

TAIC, 75% Dispersion is a 75% solution of triallyl isocyanurate from Lianada Corporation.

MT N-990 is a carbon black filler.

Tecnoflon FOR 50HS and FOR 80HS are no (low) post cure bisphenol curable fluorocarbon elastomers from Solvay, with bisphenol curing agent formulated into the resin.

Luperco 101XL is a peroxide curative agent from Atochem, the active ingredient of which is 2,5-dimethyl-2,5-di-(t-butylperoxy)hexane.

Examples 1-10 give illustrative formulations for preparing dynamic vulcanizates. Processable rubber compositions are prepared according to the formulations in either batch or continuous processes. In a batch process, processable rubber compositions are compounded in a batch mixer such as a Banbury mixer, Moriyama mixer, or a Brabender with an internal mixing attachment. The components are charged to the mixer and blended at a temperature of about 130°C for 10-15 minutes at 50 rpm rotor speed. The compositions are then heated to about 180-190°C to effect cure. If the elastomers are not cure incorporated, curing agent may also be added at this time. Stirring continues for an additional time required to achieve full cure of the elastomer, as determined for example by reaching a steady state torque reading in the mixer. In the Examples, the additional times range from about 3 to about 10 minutes. The composition is then discharged from the batch mixer and granulated to make small size pellets for use in subsequent fabrication processes, such as injection molding, compression molding, blow molding, single layer extrusion, multi-layer extrusion, insert molding, and the like.

A continuous process is carried out in a twin-screw extruder. Components are blended in a mixing zone at 130°C for 3-10 minutes, then cured in a reaction zone at 180-190°C as above, until complete cure of the elastomer is achieved. The cured elastomer/fluoroplastic blend is extruded through a 1-3 mm diameter strand die and is quenched by cooling in a water bath before passing through a strand pelletizer. The pellets can be processed by a wide variety of thermoplastic techniques into molded articles. The material can also be formed into plaques for the measurement of physical properties.

### Example 1 - AEM Elastomer and Polyvinylidene Fluoride

**EXAMPLE 1**

| **Ingredient** | **Ex1a phr** | **Ex1b phr** | **Ex1c phr** | **Ex1d phr** | **Ex1e phr** |
|---|---|---|---|---|---|
| **Vamac (AEM)** | 100.0 | 100.0 | 100.0 | 100.0 | 100.0 |
| **Naugard 445-antioxidant** | 1.0 | 1.0 | 1.0 | 1.0 | 1.0 |
| **Stearic Acid** | 1.5 | 1.5 | 1.5 | 1.5 | 1.5 |
| **Armeen 18D** | 0.50 | 0.50 | 0.50 | 0.50 | 0.50 |
| **Vanfre VAM** | 1.00 | 1.00 | 1.00 | 1.00 | 1.00 |
| **SRF Black (N774)** | 65.0 | 65.0 | 65.0 | 65.0 | 65.0 |
| **Diak No.1 (curative)** | 1.50 | 1.50 | 1.5 | 1.50 | 1.50 |
| **DOTG (coagent)** | 4.00 | 4.00 | 4.00 | 4.00 | 4.00 |
| **Hylar MP-10** | 25.00 | 50.00 | 75.00 | 100.00 | 125.00 |

### Example 2 - AEM Elastomer

**EXAMPLE 2**

| **Ingredient** | **Ex 2a Phr** | **Ex 2b phr** | **Ex 2c phr** | **Ex 2d phr** | **Ex 2e phr** |
|---|---|---|---|---|---|
| **Vamac (AEM)** | 100.0 | 100.0 | 100.0 | 100.0 | 100.0 |
| **Naugard 445-antioxidant** | 1.0 | 1.0 | 1.0 | 1.0 | 1.0 |
| **Stearic Acid** | 1.5 | 1.5 | 1.5 | 1.5 | 1.5 |
| **Armeen 18D** | 0.50 | 0.50 | 0.50 | 0.50 | 0.50 |
| **Vanfre VAM** | 1.00 | 1.00 | 1.00 | 1.00 | 1.00 |
| **SRF Black (N774)** | 65.0 | 65.0 | 65.0 | 65.0 | 65.0 |
| **Diak No. 1 (curative)** | 1.50 | 1.50 | 1.5 | 1.50 | 1.50 |
| **DOTG (coagent)** | 4.00 | 4.00 | 4.00 | 4.00 | 4.00 |
| **Halar 500LC** | 25.00 | 50.00 | 75.00 | 100.00 | 125.00 |

### Example 3 - ACM Elastomer

**EXAMPLE 3**

| **Ingredient** | **Ex 3a Phr** | **Ex 3b phr** | **Ex 3c phr** | **Ex 3d phr** | **Ex 3e phr** |
|---|---|---|---|---|---|
| **Noxtite PA-422 (ACM)** | 100.0 | 100.0 | 100.0 | 100.0 | 100.0 |
| **Naugard 445-antioxidant** | 2.0 | 2.0 | 2.0 | 2.0 | 2.0 |
| **Stearic Acid** | 1.0 | 1.0 | 1.0 | 1.0 | 1.0 |
| **HAF Carbon (N330)** | 55.0 | 55.0 | 55.0 | 55.0 | 55.0 |
| **NS-Soap** | 4.00 | 4.00 | 4.00 | 4.00 | 4.00 |
| **Cheminox ACZ-76** | 2.00 | 2.00 | 2.00 | 2.00 | 2.00 |
| **Hylar MP-10** | 25.00 | 50.00 | 75.00 | 100.00 | 125.00 |

### Example 4 - ACM

**EXAMPLE 4**

| **Ingredient** | **Ex 4a Phr** | **Ex 4b Phr** | **Ex 4c phr** | **Ex 4d phr** | **Ex 4e phr** |
|---|---|---|---|---|---|
| **Noxtite PA-422 (ACM)** | 100.0 | 100.0 | 100.0 | 100.0 | 100.0 |
| **Naugard 445-antioxidant** | 2.0 | 2.0 | 2.0 | 2.0 | 2.0 |
| **Stearic Acid** | 1.0 | 1.0 | 1.0 | 1.0 | 1.0 |
| **HAF Carbon (N330)** | 55.00 | 55.00 | 55.00 | 55.00 | 55.00 |
| **NS-Soap** | 4.00 | 4.00 | 4.00 | 4.00 | 4.00 |
| **Cheminox ACZ-76** | 2.00 | 2.00 | 2.00 | 2.00 | 2.00 |
| **Halar 500LC** | 25.00 | 50.00 | 75.00 | 100.00 | 125.00 |

### Example 5 ― EPDM Rubber

**EXAMPLE 5**

| **Ingredient** | **Ex 5a phr** | **Ex 5b Phr** | **Ex 5c phr** | **Ex 5d phr** | **Ex 5e phr** |
|---|---|---|---|---|---|
| **Nordel 1040 (EPDM)** | 100.0 | 100.0 | 100.0 | 100.0 | 100.0 |
| **Zinc Oxide** | 5.0 | 5.0 | 5.0 | 5.0 | 5.0 |
| **Carbon Black (N990)** | 5.0 | 5.0 | 5.0 | 5.0 | 5.0 |
| **Carbon Black (N550)** | 65.00 | 65.00 | 65.00 | 65.00 | 65.00 |
| **Sunpar 2280 (peroxide)** | 20.00 | 20.00 | 20.00 | 20.00 | 20.00 |
| **Varox 231 (antioxidant)** | 8.00 | 8.00 | 8.00 | 8.00 | 8.00 |
| **Hylar MP-1 0** | 25.00 | 50.00 | 75.00 | 100.00 | 125.00 |

### Example 6 - EPDM

**EXAMPLE 6**

| **Ingredient** | **Ex 6a phr** | **Ex 6b phr** | **Ex 6c phr** | **Ex 6d phr** | **Ex 6e phr** |
|---|---|---|---|---|---|
| **Nordel 1040 (EPDM)** | 100.0 | 100.0 | 100.0 | 100.0 | 100.0 |
| **Zinc Oxide** | 5.0 | 5.0 | 5.0 | 5.0 | 5.0 |
| **Carbon Black** (N990) | 5.0 | 5.0 | 5.0 | 5.0 | 5.0 |
| **Carbon Black (N550)** | 65.00 | 65.00 | 65.00 | 65.00 | 65.00 |
| **Sunpar 2280 (peroxide)** | 20.00 | 20.00 | 20.00 | 20.00 | 20.00 |
| **Varox 231 (antioxidant)** | 8.00 | 8.00 | 8.00 | 8.00 | 8.00 |
| **Halar 500LC** | 25.00 | 50.00 | 75.00 | 100.00 | 125.00 |

### Example 7 - butyl rubber (isoprene butylene copolymer rubber)

**EXAMPLE 7**

| **Ingredient** | **Ex 9a phr** | **Ex 9b phr** | **Ex 9c phr** | **Ex 9d phr** | **Ex 9e phr** |
|---|---|---|---|---|---|
| **Butyl 268** | 100.0 | 100.0 | 100.0 | 100.0 | 100.0 |
| **Carbon Black ― HAF** | 60.0 | 60.0 | 60.0 | 60.0 | 60.0 |
| **Paraffin Oil** | 20.0 | 20.0 | 20.0 | 20.0 | 20.0 |
| **Zinc Oxide** | 5.00 | 5.00 | 5.00 | 5.00 | 5.00 |
| **Ethyl Cadmate** | 2.00 | 2.00 | 2.00 | 2.00 | 2.00 |
| **Altax** | 0.50 | 0.50 | 0.50 | 0.50 | 0.50 |
| **Sulfur** | 1.00 | 1.00 | 1.00 | 1.00 | 1.00 |
| **Halar 500LC** | 25.00 | 50.00 | 75.00 | 100.00 | 125.00 |

### Example 8 - Butyl

**EXAMPLE 8**

| **Ingredient** | **Ex 10a phr** | **Ex 10b phr** | **Ex 10C phr** | **Ex 10d phr** | **Ex 10e phr** |
|---|---|---|---|---|---|
| **Butyl 268** | 100.0 | 100.0 | 100.0 | 100.0 | 100.0 |
| **Carbon Black - HAF** | 60.0 | 60.0 | 60.0 | 60.0 | 60.0 |
| **Paraffin Oil** | 20.0 | 20.0 | 20.0 | 20.0 | 20.0 |
| **Zinc Oxide** | 5.00 | 5.00 | 5.00 | 5.00 | 5.00 |
| **Ethyl Cadmate** | 2.00 | 2.00 | 2.00 | 2.00 | 2.00 |
| **Altax** | 0.50 | 0.50 | 0.50 | 0.50 | 0.50 |
| **Sulfur** | 1.00 | 1.00 | 1.00 | 1.00 | 1.00 |
| **Hylar MP-10** | 25.00 | 50.00 | 75.00 | 100.00 | 125.00 |

### Example 9 ― ACM/fluorocarbon blend

**EXAMPLE 9**

| **Ingredient** | **Ex 11a phr** | **Ex 11b phr** | **Ex 11c phr** | **Ex 11d phr** | **Ex 11e phr** |
|---|---|---|---|---|---|
| **ACM, AY 1122** | 100.0 | 100.0 | 100.0 | 100.0 | 100.0 |
| **Stearic Acid** | 0.5 | 0.5 | 0.5 | 0.5 | 0.5 |
| **Naugard 445** | 2.0 | 2.0 | 2.0 | 2.0 | 2.0 |
| **N550** | 65.0 | 65.0 | 65.0 | 65.0 | 65.0 |
| **Vanfree Vam** | 1.0 | 1.0 | 1.0 | 1.0 | 1.0 |
| **Paraffin Wax** | 1.0 | 1.0 | 1.0 | 1.0 | 1.0 |
| **Armeen DM 18 D** | 0.50 | 0.50 | 0.50 | 0.50 | 0.50 |
| **DHT4A-2** | 4.00 | 4.00 | 4.00 | 4.00 | 4.00 |
| **Emerox 1144** | 1.30 | 1.30 | 1.30 | 1.30 | 1.30 |
| **Accelerator** | 2.00 | 2.00 | 2.00 | 2.00 | 2.00 |
| **EMASTER 430W** | 2.00 | 2.00 | 2.00 | 2.00 | 2.00 |
| **Tecnoflon P757** | 100.0 | 100.0 | 100.0 | 100.0 | 100.0 |
| **Solvay Hylar MP-10** | 50.0 | 100.0 | 150.0 | 200.0 | 300.0 |
| **Luperco 101 XL** | 3.0 | 3.0 | 3.0 | 3.0 | 3.0 |
| **TAIC, 75% Dispersion** | 4.00 | 4.00 | 4.00 | 4.00 | 4.00 |
| **ZnO** | 5.00 | 5.00 | 5.00 | 5.00 | 5.00 |
| **MT N-990 Carbon Black** | 10.00 | 10.00 | 10.00 | 10.00 | 10.00 |

### Example 10 - ACM/fluorocarbon elastomer blend

**EXAMPLE 10**

| **Ingredient** | **Ex 12a phr** | **Ex 12b phr** | **Ex 12c phr** | **Ex 12d phr** | **Ex 12e phr** |
|---|---|---|---|---|---|
| **ACM, AY 1122** | 100.0 | 100.0 | 100.0 | 100.0 | 100.0 |
| **Stearic Acid** | 0.5 | 0.5 | 0.5 | 0.5 | 0.5 |
| **Naugard 445** | 2.0 | 2.0 | 2.0 | 2.0 | 2.0 |
| **N550** | 65.0 | 65.0 | 65.0 | 65.0 | 65.0 |
| **Vanfree Vam** | 1.0 | 1.0 | 1.0 | 1.0 | 1.0 |
| **Paraffin Wax** | 1.0 | 1.0 | 1.0 | 1.0 | 1.0 |
| **Armeen DM 18 D** | 0.50 | 0.50 | 0.50 | 0.50 | 0.50 |
| **DHT4A-2** | 4.00 | 4.00 | 4.00 | 4.00 | 4.00 |
| **Emerox 1144** | 1.30 | 1.30 | 1.30 | 1.30 | 1.30 |
| **Accelerator** | 2.00 | 2.00 | 2.00 | 2.00 | 2.00 |
| **EMASTER 430W** | 2.00 | 2.00 | 2.00 | 2.00 | 2.00 |
| **Tecnoflon P757** | 100.0 | 100.0 | 100.0 | 100.0 | 100.0 |
| **Solvay Halar 500LC** | 50.0 | 100.0 | 150.0 | 200.0 | 300.0 |
| **Luperco 101 XL** | 3.0 | 3.0 | 3.0 | 3.0 | 3.0 |
| **TAIC, 75% Dispersion** | 4.00 | 4.00 | 4.00 | 4.00 | 4.00 |
| **ZnO** | 5.00 | 5.00 | 5.00 | 5.00 | 5.00 |
| **MT N-990 Carbon Black** | 10.00 | 10.00 | 10.00 | 10.00 | 10.00 |

## Claims

1. A processable rubber composition comprising a cured elastomer dispersed in a matrix comprising a thermoplastic material, wherein the cured elastomer is present at a level of greater than or equal to about 35% by weight based on the total weight of cured elastomer and thermoplastic material, wherein the thermoplastic material comprises a fluorine containing thermoplastic polymer, and the cured elastomer comprises a non-nitrile rubber selected from the group consisting of acrylic rubber, EPDM rubber, butyl rubber, silicone rubber, butadiene rubber, isoprene rubber, and natural rubber.

2. A composition according to claim 1, wherein the cured elastomer is present at a level of greater than or equal to about 40% by weight.

3. A composition according to claim 1, wherein the cured elastomer comprises acrylic rubber.

4. A composition according to claim 3, wherein the cured elastomer is present at a level of greater than or equal to about 50% by weight.

5. A composition according to claim 3, wherein the fluorocarbon thermoplastic material comprises a fully fluorinated polymer and a partially fluorinated polymer.

6. A composition according to claim 3, wherein the fluorocarbon thermoplastic material is partially fluorinated.

7. A composition according to claim 3, wherein the fluorocarbon thermoplastic material comprises greater than about 59% fluorine.

8. A composition according to claim 1, wherein the elastomer comprises EPDM rubber.

9. A composition according to claim 8, wherein the fluorocarbon thermoplastic material comprises a fully fluorinated polymer and a partially fluorinated polymer.

10. A composition according to claim 8, wherein the fluorocarbon thermoplastic material is partially fluorinated.

11. A composition according to claim 8, wherein the fluorocarbon thermoplastic material comprises greater than about 59% fluorine.

12. A composition according to claim 1, wherein the cured elastomer comprises butyl.

13. A composition according to claim 12, wherein the fluorocarbon thermoplastic material comprises a fully fluorinated polymer and a partially fluorinated polymer.

14. A composition according to claim 12, wherein the fluorocarbon thermoplastic material is partially fluorinated.

15. A composition according to claim 12, wherein the fluorocarbon thermoplastic material comprises greater than about 59% fluorine.

16. A composition according to claim 1, wherein the cured elastomer comprises silicone rubber.

17. A composition according to claim 16, wherein the fluorocarbon thermoplastic material comprises a fully fluorinated polymer and a partially fluorinated polymer.

18. A composition according to claim 16, wherein the fluorocarbon thermoplastic material is partially fluorinated.

19. A composition according to claim 16, wherein the fluorocarbon thermoplastic material comprises greater than about 59% fluorine.

20. A composition according to claim 1, wherein the cured elastomer comprises butadiene or isoprene rubber.

21. A composition according to claim 20, wherein the fluorocarbon thermoplastic material comprises a fully fluorinated polymer and a partially fluorinated polymer.

22. A composition according to claim 20, wherein the fluorocarbon thermoplastic material is partially fluorinated.

23. A composition according to claim 20, wherein the fluorocarbon thermoplastic material comprises greater than about 59% fluorine.

24. A composition according to claim 1, wherein the cured elastomer comprises natural rubber.

25. A composition according to claim 24, wherein the fluorocarbon thermoplastic material is partially fluorinated.

26. A composition according to claim 24, wherein the fluorocarbon thermoplastic material comprises a fully fluorinated polymer and a partially fluorinated polymer.

27. A composition according to claim 24, wherein the fluorocarbon thermoplastic material comprises greater than about 59% fluorine.

28. A method for making a rubber composition comprising: forming a mixture by combining an uncured or partially cured elastomeric material, a thermoplastic material and a curative for the elastomeric material, and heating the mixture at a temperature and for a time sufficient to effect vulcanization of the elastomeric material, wherein mechanical energy is applied to mix the mixture during the heating step; wherein the thermoplastic material comprises a fluorine-containing polymeric material, and the elastomeric material comprises a non-nitrile rubber selected from the group consisting of acrylic, EPDM, butyl, silicone, butadiene, isoprene, and natural rubber.

29. A method according to claim 28 comprising: mixing the elastomer and thermoplastic components in the presence of a curative agent, and heating during mixing to effect cure of the elastomeric component.

30. A method according to claim 28 comprising: mixing the elastomeric material and the thermoplastic material for a time and at a shear rate sufficient to form a dispersion of the elastomeric material in a continuous thermoplastic phase; adding a curative to the dispersion while continuing the mixing; and heating the dispersion while continuing to mix the curative, elastomeric material, and thermoplastic material.

31. A method according to claim 28, wherein the thermoplastic comprises a fully fluorinated polymer and a partially fluorinated polymer.

32. A method according to claim 28, wherein the thermoplastic is partially fluorinated.

33. A method according to claim 28, wherein the thermoplastic comprises greater than about 59% by weight fluorine.

34. A method according to claim 28, wherein the elastomer comprises an acrylic rubber.

35. A method according to claim 28, wherein the elastomer comprises EPDM rubber.

36. A method according to claim 28, wherein the elastomer comprises butyl rubber.

37. A method according to claim 28, wherein the elastomer comprises silicone rubber.

38. A method according to claim 28, wherein the elastomer comprises a rubber selected from the group consisting of butadiene rubber and isoprene rubber.

39. A method according to claim 28, wherein the elastomer comprises a natural rubber.

40. A method according to claim 28, comprising a continuous process.

41. A method according to claim 40, carried out in a twin screw extruder.

42. A method according to claim 28, comprising a batch process.

43. A method according to claim 28, wherein the composition comprises at least about 35 parts by weight vulcanized elastomeric material per 100 parts of the vulcanized elastomeric material and thermoplastic material combined.

44. A method according to claim 28, wherein the composition comprises at least about 45 parts by weight vulcanized elastomeric material per 100 parts of the vulcanized elastomeric material and thermoplastic material combined.

45. A method according to claim 28, wherein the composition comprises at least about 50 parts by weight vulcanized elastomeric material per 100 parts of the vulcanized elastomeric material and thermoplastic material combined.

46. A shaped article comprising a cured elastomer dispersed in a matrix comprising a thermoplastic material, wherein the thermoplastic material comprises a fluorine-containing thermoplastic polymer, and wherein the cured elastomer comprises a non-nitrile rubber selected from the group consisting of acrylic, EPDM, butyl, silicone, butadiene, isoprene, and natural rubber.

47. A shaped article according to claim 46, wherein the hardness of the article is Shore A 50 or greater, the tensile strength of the article is about 4 MPa or greater, the modulus at 100% of the article is 4 Mpa or greater, or the elongation at break of the article is about 10% or greater.

48. A shaped article according to claim 46, wherein the cured elastomer is present at a level of at least about 35% by weight based on the total weight of cured elastomer and thermoplastic polymer.

49. A shaped article according to claim 46, wherein the cured elastomer is present at a level of at least about 50% by weight based on the total weight of cured elastomer and thermoplastic polymer.

50. A shaped article according to claim 46, wherein the thermoplastic material comprises greater than about 59% by weight fluorine.

51. A shaped article according to claim 46, wherein the thermoplastic material comprises a fully fluorinated polymer and a partially fluorinated polymer.

52. A shaped article according to claim 48, wherein the elastomer comprises an acrylic elastomer.

53. A shaped article according to claim 48, wherein the elastomer comprises EPDM rubber.

54. A shaped article according to claim 48, wherein the elastomer comprises butyl rubber.

55. A shaped article according to claim 48, wherein the elastomer comprises silicone rubber.

56. A shaped article according to claim 48, wherein the elastomer comprises butadiene or isoprene rubber.

57. A shaped article according to claim 48, wherein the elastomer comprises natural rubber.

58. A seal according to claim 46.

59. An O-ring according to claim 46.

60. A gasket according to claim 46.

61. A hose according to claim 46.

62. A continuous process for making a processable rubber composition comprising: combining an elastomer, curative agent, and a thermoplastic material comprising a fluorine containing thermoplastic polymer in a twin screw extruder, mixing the combination in the twin screw extruder for a time and at a temperature sufficient to effect cure of the fluorocarbon elastomer, and extruding the cured mixture, wherein the thermoplastic material comprises greater than or equal to about 59% fluorine and the elastomer comprises non-nitrile rubber selected from the group consisting of acrylic, EPDM, butyl, silicone, butadiene, isoprene, and natural rubber.

63. A process according to claim 62 comprising, injecting a combination of the elastomer and thermoplastic material into the twin screw extruder with a first feeder, and injecting the curative agent into the screw extruder with a second feeder downstream from the first feeder.

64. A method for reducing costs of a manufacturing process for making shaped rubber articles from a processable rubber composition, comprising recycling scrap material generated during the manufacturing process to make new shaped articles comprising the processable rubber composition, wherein the processable rubber composition is the product of dynamic vulcanization of an elastomer in the presence of a thermoplastic material, wherein the thermoplastic material comprises a fluorine containing thermoplastic polymer, and the elastomer is a non-nitrile rubber selected from the group consisting of acrylic, EPDM, butyl, silicone, butadiene, isoprene, and natural rubber.

65. A method according to claim 64, wherein the manufacturing process comprises forming the shaped articles by a thermoplastic processing technique.

66. A method according to claim 64, wherein the thermoplastic processing technique is selected from the group consisting of blow molding, injection molding, compression molding, and extrusion.
